Europäisches Patentamt

European Patent Office

Office européen des brevets

(11) Veröffentlichungsnummer : **0 040 797**
**B1**

(12)

# EUROPÄISCHE PATENTSCHRIFT

(45) Veröffentlichungstag der Patentschrift :
11.12.85

(21) Anmeldenummer : 81103846.2

(22) Anmeldetag : 19.05.81

(51) Int. Cl.⁴ : **B 65 D 51/20, B 65 D 77/20**

---

(54) Mehrschichtiger Verschluss für eine Gefässöffnung.

---

(30) Priorität : 28.05.80 DE 3020295

(43) Veröffentlichungstag der Anmeldung :
02.12.81 Patentblatt 81/48

(45) Bekanntmachung des Hinweises auf die Patenterteilung : 11.12.85 Patentblatt 85/50

(84) Benannte Vertragsstaaten :
AT BE CH DE FR IT LI NL

(56) Entgegenhaltungen :
FR-A- 2 104 342
FR-A- 2 307 719
GB-A- 1 066 497
US-A- 3 154 225
US-A- 3 235 165
US-A- 3 275 203
US-A- 3 335 939

(73) Patentinhaber : Zweckform Werk GmbH
Postfach 1280 Miesbacher Strasse 5
D-8150 Holzkirchen-Oberlaindern (DE)

(72) Erfinder : Ast, Hans-Peter
Haidstrasse 36b
D-8150 Holzkirchen (DE)
Erfinder : Lang, Josef
Burgstrasse 4.
D-8151 Oberwarngau (DE)
Erfinder : Pischetsrieder, Albert
Dorfstrasse 8
D-8165 Elbach-Ried (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

## Beschreibung

Die Erfindung betrifft einen mehrschichtigen Verschluß für eine Gefäßöffnung nach dem Oberbegriff des Anspruchs 1.

Bei einem nach der US-PS-3 154 225 bekannten Verschluß dieser Art verlaufen die Löcher in Form von parallel nebeneinander liegenden Schlitzen in der Schicht, die das Innere des Gefäßes abdeckt, von deren Mittelbereich zu einem Rand der Schicht und sind mit einem ihnen gemeinsamen Haftetikett abgedeckt, dessen Anfaßlasche oberhalb desjenigen Bereichs der Schicht verläuft, der nicht mit den Schichten versehen ist, und bis zu deren Rand reicht. Die Anfaßlasche kann versehentlich abgehoben werden, etwa beim Verpacken der Gefäße. Außerdem dienen die schlitzartigen Öffnungen sowohl zum Ausgießen des Gefäßinhalts als auch zum Belüften des Gefäßes, was das Ausgießen des Gefäßes bei vollem Gefäß zunächst erschwert.

Nach der US-PS-3 235 165 ist es bekannt, zentrisch in einer das Gefäß abdeckenden Schicht ein Loch vorzusehen und dieses mit einem Etikett abzudecken, das im Randbereich außerhalb des Lochs unterseitig mit einer Klebstoffschicht versehen ist. Dieses Etikett weist eine radial nach außen weisende Anfaßlasche auf.

Nach der FR-PS-2 104 342 ist es bekannt, mehrere voneinander getrennte Löcher in einer ein Gefäß abdeckenden Schicht mit einem Etikett abzudecken, das eine zum Rand der Gefäßöffnung weisende Anfaßlasche hat.

Nach der US-PS-3 275 203 ist ein mehrschichtiger Verschluß für eine Gefäßöffnung bekannt, der in einer seiner inneren Schichten eine unterseitig mit einer bei Raumtemperatur klebrigen Klebstoffschicht versehene Folienlage aufweist, die ein zum Inneren des Gefäßes führendes Loch in einer unter ihr liegenden Schicht abdeckt, wobei auf der Folienlage eine in einem Deckel für die Gefäßöffnung befindliche Dichtscheibe mit einer unterseitigen Wachskaschierung angeordnet ist.

Aufgabe der Erfindung ist es, einen mehrschichtigen Verschluß nach dem Oberbegriff des Anspruchs 1 anzugeben, der ein Belüften des Gefäßes getrennt vom Ausgießen des Gefäßes schon von Beginn des Ausgießens an gestattet, dessen Anfaßlaschen nicht versehentlich beim Handhaben des Gefäßres angegriffen werden können.

Die Lösung dieser Aufgabe ist im Kennzeichen des Anspruchs 1 vorgesehen.

Dadurch, daß zwei Löcher vorgesehen sind, kann das eine zum Ausgießen und as andere zum Belüften des Gefäßes schon vor Beginn des Ausgießens an dienen. Da die Anfaßlaschen radial nach innen weisen, liegen sie in gewissem Sinn geschützt von dem Innenbereich des Deckels.

Die Erfindung wird im folgenden unter Hinweis auf die beigefügten Zeichnungen beschrieben.

Figur 1 zeigt schematisch den oberen Teil eines Gefäßes mit abgenommenem Deckel ;

Figur 2 zeigt einen Bereich des Schichtaufbaus auf der Gefäßöffnung unterhalb des Deckels ;

Figur 3 zeigt eine Aufsicht auf die Gefäßöffnung bei abgenommenem Deckel.

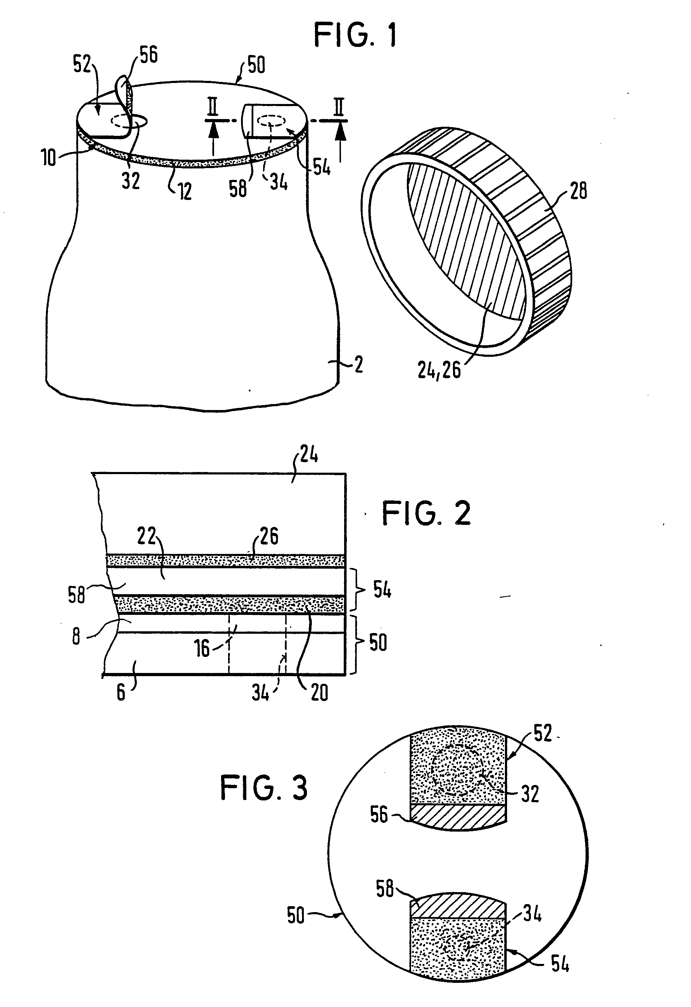

Ein Glasgefäß 2 nach Fig. 1 weist eine Öffnung auf, die mit einer Membran 50 geschlossen ist. Die Membran 50 weist unterseitig eine Pergaminschicht 6 und oberseitig eine Aluminiumschicht 8 auf und ist auf dem Rand 10 der Öffnung des Gefäßes 2 mit einer Klebstoffschicht 12 festgeklebt. Aus der Membran 50 sind zwei Löcher 32, 34 gestanzt. Das ausgestanzte Material 16 haftet in Form eines Kreisfleckens an der Unterseite eines Haftetiketts 52 bzw. 54. Jedes Haftetikett 52, 54 weist unterseitig eine selbsthaftende Klebstoffschicht 20 und oberseitig eine Lage 22 aus Papier oder Folie auf. Auf den Haftetiketten 52, 54 befindet sich eine Dichtscheibe 24, die unterseitig mit einer Wachskaschierung 26 versehen ist. Diese Dichtscheibe mit ihrer Wachskaschierung bleibt in einem Deckel 28, wenn der Deckel 28 vom Gefäß 2 abgenommen wird. Mindestens ein Haftetikett 52, 54 kann dann, wie in Fig. 1 dargestellt, wenigstens teilweise abgehohen werden, um jeweils ein Loch 32 bzw. 34 freizulegen.

Jedes Haftetikett 52, 54 ist mit je einer radial nach innen weisenden Anfaßlasche 56, 58 versehen.

## Patentansprüche

1. Mehrschichtiger Verschluß für eine Gefäßöffnung, der in einer seiner inneren Schichten ein freizulegendes, unterseitig mit einer selbstklebenden Klebstoffschicht versehenes Haftetikett (52, 54) aufweist, bei dem das Haftetikett (52, 54) mehrere zum Inneren des Gefäßes führende Löcher (32, 34) in wenigstens einer unter ihm liegenden Schicht (50) abdeckt und in einem in Abstand von den Löchern (32, 34) befindlichen, zum Anfassen dienenden Bereich unterseitig nicht mit Klebstoff versehen ist, dadurch gekennzeichnet, daß zwei Löcher (32, 34) mit ihnen gesondert zugeordneten Haftetiketten (52, 54) und unterseitig nicht mit Klebstoff versehenen, radial nach innen weisenden Anfaßlaschen (56, 58) vorgesehen sind.

2. Verschluß nach Anspruch 1, dadurch gekennzeichnet, daß das Loch (32, 34) in der unter dem Haftetikett (52, 54) liegenden Schicht (50) mit aus dieser Schicht (50) gestanztem Material gefüllt ist.

## Claims

1. Multi-layer closure for a vessel opening, comprising in one of its inner layers an adhesive label (52, 54) to be exposed, provided on the under side with a self-adhesive coating, wherein the adhesive label (52, 54) covers off several holes (32, 34), leading to the interior of the vessel, in at least one layer (50) lying beneath it and is not provided with adhesive on the under side in a zone serving for grasping and situated at a distance from the holes (32, 34), characterised in that two holes (32, 34) are provided having adhesive labels (52, 54) separately allocated to them and radially inwardly pointing grasping tabs (56, 58) not provided with adhesive on the under side are provided.

2. Closure according to Claim 1, characterised in that the hole (32, 34) in the layer (50) lying under the adhesive label (52, 54) is filled with material punched out of this layer (50).

**Revendications**

1. Fermeture à plusieurs couches pour un orifice de récipient, présentant, dans l'une de ses couches internes, une étiquette adhésive (52, 54) devant être enlevée et dotée, à sa face inférieure, d'une couche de substance auto-adhésive, dans laquelle l'étiquette adhésive (52, 54) recouvre plusieurs trous (32, 34) débouchant dans l'espace interne du récipient et ménagés dans au moins une couche (50) sous-jacente à l'étiquette et, sur sa face inférieure, est dépourvue d'adhésif dans une région située à distance desdits trous (32, 34) et destinée à la préhension, caractérisée par le fait que sont prévus deux trous (32, 34) avec les étiquettes adhésives (52, 54) qui leur sont séparément associées et avec des onglets de préhension (56, 58) qui sont orientés radialement vers l'intérieur et dont la face inférieure est dépourvue d'un adhésif.

2. Fermeture selon la revendication 1, caractérisée par le fait que le trou (32, 34) pratiqué dans la couche (50) sous-jacente à l'étiquette adhésive (52, 54) est comblé par la matière poinçonnée dans cette coche (50).

FIG. 1

FIG. 2

FIG. 3